**Europäisches Patentamt**

**European Patent Office**

**Office européen des brevets**

(11) Veröffentlichungsnummer: **0 014 914**

**A1**

## (12) EUROPÄISCHE PATENTANMELDUNG

(21) Anmeldenummer: **80100642.0**

(22) Anmeldetag: **07.02.80**

(51) Int. Cl.³: **H 02 H 9/02**

(30) Priorität: **22.02.79 DE 2906972**

(43) Veröffentlichungstag der Anmeldung:
**03.09.80 Patentblatt 80/18**

(84) Benannte Vertragsstaaten:
**AT BE CH FR GB IT NL SE**

(71) Anmelder: **SIEMENS AKTIENGESELLSCHAFT Berlin und München**
**Postfach 22 02 61**
**D-8000 München 22(DE)**

(72) Erfinder: **Meintrup, Walter Dipl.-Ing.**
**Am Vogelherd 129**
**D-8520 Erlangen(DE)**

(54) **Drossel zur Begrenzung von Kurzschlussströmen.**

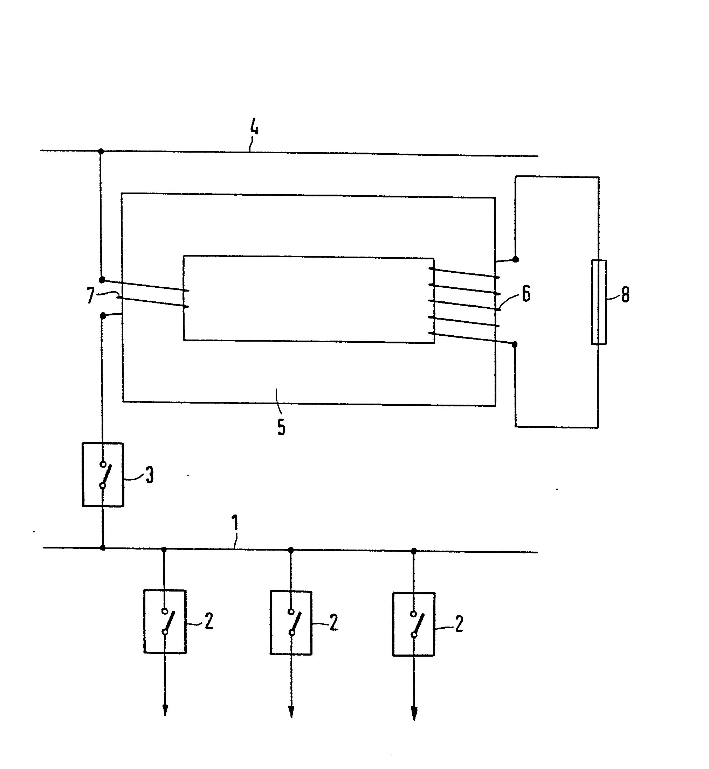

(57) Zur Begrenzung von Kurzschlußströmen in ein- oder mehrphasigen Hochspannungs- und Niederspannungsnetzen wird eine Eisendrossel (5) mit zwei galvanisch voneinander getrennten Wicklungen (6,7) derart eingesetzt, daß die Primärwicklung (7) vom Verbraucherstrom durchflossen wird, während die Sekundärwicklung (6) im Normalbetrieb durch eine Sicherung (8) kurzgeschlossen ist. Im Kurzschlußfall erreicht der Strom auf der Sekundärseite der Drossel den Nennstrom der Sekundärwicklung und löst die Sicherung aus. Dadurch erhöht sich der induktive Widerstand auf der Primärseite der Drossel. (Fig. 1).

SIEMENS AKTIENGESELLSCHAFT    Unser Zeichen
Berlin und München            VPA 79 P 3 0 3 3 EUR


## Drossel zur Begrenzung von Kurzschlußströmen

Zur Begrenzung von Kurzschlußströmen in Hochspannungsnetzen ist der Einsatz von Luftdrosselspulen bekannt, die in Abhängigkeit vom Belastungsstrom einen Spannungsabfall erzeugen. Ist die Drossel beispielsweise auf einen Spannungsabfall $\Delta U = 10 \%$ an der Drossel bemessen, dann ergibt sich, auf die verkettete Spannung eines Netzes bezogen, im Nennbetrieb laufend ein Nennspannungsabfall $\Delta U_N = \sqrt{3} \cdot \Delta U$ also von 17,32 % der Nennspannung. Da die Reaktanz des Netzes zusätzlich einen lastabhängigen Spannungsabfall verursacht, sind Luftdrosseln im Hinblick auf die geforderte Spannungskonstanz des Netzes nur bedingt einsetzbar.

Der Erfindung liegt die Aufgabe zugrunde, einen im Netz auftretenden Kurzschlußstrom mittels einer Drossel zu begrenzen, an der eine im Nennbetrieb möglichst niedrige und von der Last möglichst unabhängige, im Kurzschlußfall dagegen hohe Spannung abfällt.

Hk 2 Di / 16.2.1979

0014914

Gemäß der Erfindung wird diese Aufgabe dadurch gelöst, daß die Drossel eine Eisendrossel mit zwei galvanisch voneinander getrennten Wicklungen je Phase ist, von denen die eine (Primärwicklung) vom Verbraucherstrom durchflossen und die andere (Sekundärwicklung) durch eine auf ihren Nennstrom ansprechende Abschaltvorrichtung kurzgeschlossen ist.

An Hand eines in der Zeichnung dargestellten Ausführungsbeispiels wird die Erfindung im folgenden näher erläutert.

In der Zeichnung ist eine Sammelschiene 1 mit mehreren über Schalter 2 schaltbaren Abzweigen in einphasiger Darstellung angedeutet. Die Sammelschiene ist über einen weiteren Schalter 3 an ein Hoch- oder Niederspannungsnetz anschließbar. Zur Begrenzung von Kurzschlußströmen liegt in der das Netz und den Schalter 3 verbindenden Leitung die Primärwicklung 7 einer Eisendrossel 5, deren Sekundärwicklung 6 über eine Abschaltvorrichtung kurzgeschlossen ist. An Stelle der in der Zeichnung als Schmelzsicherung 8 dargestellten Abschaltvorrichtung, deren Auslösestrom auf den Nennstrom der Sekundärwicklung abgestimmt ist, kann eine beispielsweise aus elektronischen Bauelementen aufgebaute Abschaltvorrichtung oder ein Schnellschalter eingesetzt sein.

Der induktive Spannungsabfall an der Primärwicklung der Drossel wird in jedem Belastungsfall von der Sekundärwicklung kompensiert, solange der Ansprechstrom der Sicherung nicht erreicht wird. Bis zum Ansprechen der Sicherung verhält sich die Eisendrossel wie eine Luftdrossel. Der Widerstand dieser Luftdrossel ist abhängig
von der Induktivität der Spule in Luft.
Für diese gilt:

$$L_o = \frac{\mu_o \cdot A_o \cdot N^2}{l}$$

Darin ist:

$\mu_o$ = magnetische Feldkonstante in Luft

$A_o$ = verbleibender Luftquerschnitt
nach Abzug des Eisenquerschnittes der Spule

$N$ = Anzahl der Windungen

$l$ = Weglänge der magnetischen Feldlinien

Im Kurzschlußfall erreicht der in der Sekundärwicklung
fließende Strom den Ansprechwert der Sicherung, so daß
der Strom bereits im Anstieg unterbrochen wird. Damit
entfallen die Gegenamperewicklungen der Sekundärwicklung und die Induktivität der Spule geht über in

$$L_r = \frac{\mu_o \cdot \mu_r \cdot A_r \cdot N^2}{l}$$

Darin ist:

$\mu_r$ = relative Permeabilität

$A_r$ = Eisenquerschnitt

Das Verhältnis der beiden Widerstandswerte ist also
im wesentlichen von $\mu_r$ abhängig. Da mit normalem
Dynamoblech ein $\mu_r$ $\mu_o$ von 10.000 erreichbar ist,
läßt sich auch eine entsprechende Widerstandserhöhung
im Kurzschlußfall erreichen, solange der Eisenkern
nicht in Sättigung geht.

0014914

Diese große Widerstandszunahme im Kurzschlußfall ermöglicht es, die Windungszahl der Primärseite und damit den Spannungsabfall im Nennbetrieb klein zu halten. So genügt in der Praxis eine Einzelwindung auf der Primärseite mit einem verketteten Spannungsabfall, der kleiner als 1 % ist.

Im Normalbetrieb der Drossel, d.h. mit kurzgeschlossener Sekundärwicklung heben sich die Flüsse im Eisen auf; die Wahl des Eisenquerschnittes ist also unabhängig von den Nennströmen der Drossel. Will man jedoch im Kurzschlußfall auf einen definierten Restkurzschlußstrom begrenzen, benötigt man einen Eisenquerschnitt, der u. a. vom Verlauf der relativen Permeabilität $\mu_r$ in Abhängigkeit von der Feldstärke bestimmt wird.

Auf Grund der Begrenzung des Kurzschlußstromes durch die Eisendrossel eröffnet sich die Möglichkeit, daß die nachgeschaltete Schaltanlage nicht vom Netz abgeschaltet wird, wenn ein Kurzschluß in den Abzweigen auftritt. In Abhängigkeit von dem jeweiligen Belastungszustand des Netzes im Kurzschlußfall und damit von dem Spannungsabfall an der Drossel nach Auslösung der Sicherung braucht der Betrieb, zumindest der wichtigsten Antriebe, nicht unterbrochen zu werden.

Insbesondere in Niederspannungsnetzen kann es zweckmäßig sein, die Eisendrossel in Beton einzubetten.

3 Patentansprüche
1 Figur

Patentansprüche

1. Drossel zur Begrenzung von in ein- oder mehrphasigen Stromversorgungsnetzen auftretenden Kurzschlußströmen, d a d u r c h   g e k e n n z e i c h n e t , daß die Drossel eine Eisendrossel (5) mit zwei galvanisch voneinander getrennten Wicklungen je Phase ist, von denen die eine (Primärwicklung 7) vom Verbraucherstrom durchflossen und die andere (Sekundärwicklung 6) durch eine auf ihren Nennstrom ansprechende Abschaltvorrichtung (8) kurzgeschlossen ist.

2. Drossel nach Anspruch 1, d a d u r c h   g e - k e n n z e i c h n e t , daß die relative Permeabilität des Eisenkerns der Drossel (5) groß und die Anzahl der Windungen der Primärwicklung (7) klein ist.

3. Drossel nach Anspruch 1 oder 2, d a d u r c h g e k e n n z e i c h n e t , daß die Primärwicklung (7) der Drossel (5) in der das Netz (4) mit der Sammelschiene (1) einer Schaltanlage verbindenden Leitung liegt.

# EUROPÄISCHER RECHERCHENBERICHT

**Europäisches Patentamt**

Nummer der Anmeldung

EP 80 10 0642

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 250 242 (THOMSON-HOUSTON)<br>* Seite 1, Zeilen 14-21; Seite 2, Zeilen 17-51; Abbildungen * | 1,3 |
| | -- | |
| X | US - A - 1 696 177 (E.R. EVANS)<br>* Seite 1, Zeile 86 bis Seite 2, Zeile 14; Abbildung 1 * | 1,2 |
| | -- | |
| X | DE - C - 855 602 (KESSELRING)<br>* Seite 2, Zeilen 42-55; Seite 2, Zeile 119 bis Seite 3, Zeile 23; Abbildung 3 * | 1,2 |
| | -- | |
| | DE - C - 576 933 (KOCH & STERZEL)<br>* Seite 1, Zeilen 1-9 * | 1 |
| | ---- | |

**KLASSIFIKATION DER ANMELDUNG (Int.Cl ³)**

H 02 H 9/02

**RECHERCHIERTE SACHGEBIETE (Int. Cl. ³)**

H 02 H 9/02

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-04-1980 | RUGGIU |

EPA form 1503.1  06.78